# FASCICULE DE BREVET EUROPEEN

(11) **EP 4 354 013 B1**
(45) Date de publication et mention de la délivrance du brevet: **09.04.2025**
(21) Numéro de dépôt: 23200513.2
(22) Date de dépôt: 28.09.2023
(51) Int. Cl.: F17C 13/00

(54) **ENSEMBLE CRYOGÉNIQUE**
KRYOGENE ANORDNUNG
CRYOGENIC ASSEMBLY

(30) Priorité: 13.10.2022 FR 2210537
(43) Date de publication de la demande: 17.04.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: VARRASSI, Lucien, 57365 Ennery (FR); GIBAUX, Etienne, 57365 Ennery (FR); HEMBERT, Vincent, 57365 Ennery (FR); BERNARD, Jean-Pierre, 57365 Ennery (FR); VELLANDI, Fabrice, 57365 Ennery (FR)
(74) Mandataire: Air Liquide

(56) Documents cités:
- WO-A1-2022/099336
- FR-A1- 2 896 302
- US-A- 5 954 101
- US-A1- 2018 266 629
- US-A1- 2021 222 833

## Description

La présente invention porte sur un ensemble cryogénique et un procédé de manutention d'un tel ensemble cryogénique.

US5954101A divulgue un tel ensemble.

On connaît différents types d'ensembles cryogéniques comportant un réservoir cryogénique, une conduite sous vide et un réceptacle pour loger au moins partiellement la conduite. En tel ensemble cryogénique est par exemple une semi-remorques cryogénique ou wagon-citerne cryogénique.

Un tel réceptacle peut loger en outre un équipement fluidique traversé par du fluide cryogénique sortant du réservoir.

Un problème connu est que l'espace disponible à l'intérieur du réceptacle est tel que la dépose de l'équipement fluidique est alors impossible. Ceci est particulièrement problématique lorsqu'il est nécessaire de remplacer l'équipement fluidique par un autre, notamment lorsqu'il est nécessaire d'ajouter ou de remplacer une fonction à l'équipement fluidique.

La présente invention vise à remédier efficacement à ces inconvénients en proposant un ensemble cryogénique comportant :
- un réservoir cryogénique ;
- un réceptacle s'étendant selon un axe longitudinal entre un premier côté longitudinal et un deuxième côté longitudinal, le réceptacle étant situé à l'extérieur du réservoir cryogénique ;
- une conduite comportant :
   - une première extrémité connectée au réservoir cryogénique pour qu'un fluide cryogénique contenu dans le réservoir cryogénique puisse circuler dans la conduite ;
   - une deuxième extrémité située à l'intérieur du réceptacle ;
   - une première portion longitudinale située à l'intérieur du réceptacle et configurée pour permettre au fluide cryogénique de circuler dans un premier sens allant de la première extrémité vers la deuxième extrémité ;
   - une deuxième portion longitudinale située à l'intérieur du réceptacle ;
   - un coude situé à l'intérieur du réceptacle entre la première portion et la deuxième portion ;
   - une bride de raccordement solidaire de la conduite et située entre le coude et la deuxième extrémité, la bride de raccordement étant située à une première distance de la deuxième extrémité ;
- un équipement fluidique comportant une extrémité d'entrée et une extrémité de sortie et étant configuré pour être monté de façon amovible dans le réceptacle, en position montée :
   - la deuxième extrémité étant insérée au moins partiellement à l'intérieur de l'équipement fluidique via l'extrémité d'entrée ;
   - l'équipement fluidique étant raccordé à la bride de raccordement pour permettre au fluide cryogénique d'entrer dans l'équipement fluidique par l'extrémité d'entrée.

Ceci permet le montage et le démontage de l'équipement fluidique par rapport au réceptacle.

Selon une réalisation, en position montée de l'équipement fluidique, une deuxième distance sépare l'extrémité de sortie de l'équipement fluidique d'un plan orthogonal à l'axe longitudinal et adjacent au premier côté longitudinal, la deuxième distance étant supérieure à la première distance.

Ceci permet de démonter l'équipement fluidique en le faisant coulisser longitudinalement le long de l'axe longitudinal dès lors qu'il n'est plus raccordé à la bride de raccordement.

Selon une réalisation, le réceptacle est monté solidaire du réservoir cryogénique.

Selon une réalisation, la conduite est montée libre par rapport au réceptacle.

Selon une réalisation, la première portion longitudinale s'étend selon une direction parallèle à la direction dans laquelle s'étend la deuxième portion longitudinale.

Ceci permet au fluide de circuler dans un premier sens lorsqu'il circule dans la première portion longitudinale et dans un deuxième sens, opposé au premier sens, lorsqu'il circule dans la deuxième portion.

Selon une réalisation, le coude est en forme de « U ».

Selon une réalisation, la première portion longitudinale s'étend le long de l'axe longitudinal.

Selon une réalisation, la deuxième portion longitudinale s'étend le long de l'axe longitudinal.

Selon une réalisation, l'équipement fluidique comporte une pompe et/ou un débitmètre.

Selon une réalisation, l'extrémité d'entrée comporte un dispositif d'accouplement mécanique avec la bride de raccordement.

Selon une réalisation, un joint est interposé entre le dispositif d'accouplement mécanique et la bride de raccordement.

Selon une réalisation, la deuxième extrémité forme une extrémité libre de la deuxième portion.

Selon une réalisation, la conduite comporte un tube, notamment un tube rigide

Selon une réalisation, la première extrémité de la conduite est connectée, notamment fluidiquement, au réservoir cryogénique par soudage.

Selon une réalisation, la conduite est fixée au réservoir cryogénique, notamment par au moins un support de fixation relié à la paroi externe du réservoir cryogénique.

Selon une réalisation, l'ensemble cryogénique comporte une armoire de commande montée solidaire par rapport au réservoir cryogénique.

Selon une réalisation, le premier côté longitudinal est adjacent à une face de l'armoire.

Selon une réalisation, le premier côté longitudinal comporte une ouverture débouchant sur la face de l'armoire.

Selon une réalisation, en position montée de l'équipement fluidique, l'extrémité de sortie est plus proche du premier côté longitudinal que du deuxième côté longitudinal.

Selon une réalisation, la longueur de la première portion longitudinale est supérieure à la longueur de l'équipement fluidique mesurée entre ses extrémités d'entrée et de sortie.

Selon une réalisation, le coude est configuré pour permettre au fluide de s'écouler dans la deuxième portion selon un deuxième sens, opposé au premier sens.

Selon une réalisation, la conduite pénètre dans le réceptacle par le premier côté longitudinal.

Selon une réalisation, l'ensemble cryogénique comporte un tuyau de distribution du fluide cryogénique, tel qu'un flexible, situé au moins partiellement à l'intérieur du réceptacle et étant connecté de manière amovible à l'extrémité de sortie de l'équipement fluidique.

Un tel ensemble cryogénique permet un positionnement adapté du tuyau de distribution du fluide cryogénique par rapport au réservoir cryogénique, ce qui permet de faciliter la distribution du fluide cryogénique et/ou de limiter la longueur du tuyau de distribution.

Selon une réalisation, la conduite est du type isolée thermiquement et sous vide.

Selon une réalisation, la deuxième distance est inférieure à 2 fois la première distance, notamment inférieure à 1,5 fois la première distance, en particulier inférieure à 1,2 fois la première distance.

Selon une réalisation, le réceptacle comporte une paroi supérieure notamment munie d'une première pluralité d'orifices pour permettre l'aération du réceptacle.

Selon une réalisation, la paroi supérieure comporte une pluralité d'ouïes, notamment des ouïes progressives, pour permettre d'éviter à un liquide de pénétrer par gravité à l'intérieur du réceptacle tout en permettant d'évacuer un gaz se trouvant à l'intérieur du réceptacle lors d'une fuite.

Selon une réalisation, les ouïes sont obtenues par emboutissage.

Selon une réalisation, le réceptacle comporte une paroi inférieure munie d'un bac de collecte pour la collecte de condensats et/ou d'air liquéfié.

Selon une réalisation, le réceptacle comporte une face avant s'étendant selon un plan parallèle à l'axe longitudinal et comportant au moins une portion amovible ou une paroi amovible, pour permettre l'accès à l'intérieur du réceptacle.

Selon une réalisation, le réceptacle comporte une paroi latérale au niveau du premier côté longitudinal et/ou au niveau du deuxième côté longitudinal, la paroi latérale comportant notamment un bord non rectiligne épousant la paroi externe du réservoir cryogénique.

Selon une réalisation, l'ensemble cryogénique comporte un collier fixé au réceptacle et configuré pour être disposé dans une première configuration dans laquelle il encercle au moins partiellement l'équipement fluidique et autorise un guidage de l'équipement fluidique pour permettre son coulissement dans la direction de l'axe longitudinal.

Selon une réalisation, le collier est fixé au réceptacle par soudure ou vissé au réceptacle.

Selon une réalisation, le collier étant configuré pour être disposé dans une deuxième configuration dans laquelle l'équipement fluidique est libre par rapport au réceptacle au moins selon une direction transversale à l'axe longitudinal.

Selon une réalisation, le fluide cryogénique comporte de l'hydrogène liquide ou de l'hélium liquide.

L'invention concerne en outre un procédé de manutention d'un ensemble cryogénique tel que décrit ci-dessus, comportant les étapes de :
- désolidariser l'équipement fluidique de la bride de raccordement ;
- déplacer l'équipement fluidique en le faisant coulisser selon l'axe longitudinal en direction du premier côté longitudinal, jusqu'à ce que la deuxième extrémité soit située à l'extérieur de l'équipement fluidique.
- extraire l'équipement fluidique de l'intérieur du réceptacle.

Selon une réalisation, le procédé comporte une étape d'inerter la conduite préalablement à l'étape de désolidariser l'équipement fluidique de la bride de raccordement.

Selon une réalisation, le réceptacle est disposé à l'arrière du réservoir cryogénique.

L'invention concerne encore un véhicule tel qu'un camion ou une remorque ou une semi-remorque ou un wagon-citerne, comportant un ensemble cryogénique tel que décrit ci-dessus.

Selon une réalisation, le véhicule comporte une armoire de commande.

Selon une réalisation, le véhicule comporte un essieu arrière.

Selon une réalisation, le réceptacle est disposé sous l'armoire de commande ou dans l'armoire de commande.

En variante, le réceptacle est disposé au niveau de l'essieu arrière, notamment au-dessus d'un garde-boue.

Selon une réalisation, le réceptacle est disposé à l'arrière du véhicule.

Selon une réalisation, le véhicule s'étend le long de l'axe longitudinal.

L'invention concerne enfin, l'utilisation d'un ensemble cryogénique tel que décrit ci-dessus, sur un camion ou une remorque ou une semi-remorque ou un wagon-citerne.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'un ensemble cryogénique selon l'invention ;
[Fig. 2] La figure 2 est une représentation schématique de l'ensemble cryogénique de la figure 1, un équipement fluidique étant monté dans un réceptacle ;
[Fig. 3] La figure 3 est une représentation schématique de l'ensemble cryogénique de la figure 2, l'équipement fluidique étant en cours de démontage par rapport au réceptacle ; et
[Fig. 4] La figure 4 est une représentation schématique du procédé selon l'invention.

Les éléments identiques, similaires, ou analogues, conservent la même référence d'une figure à l'autre.

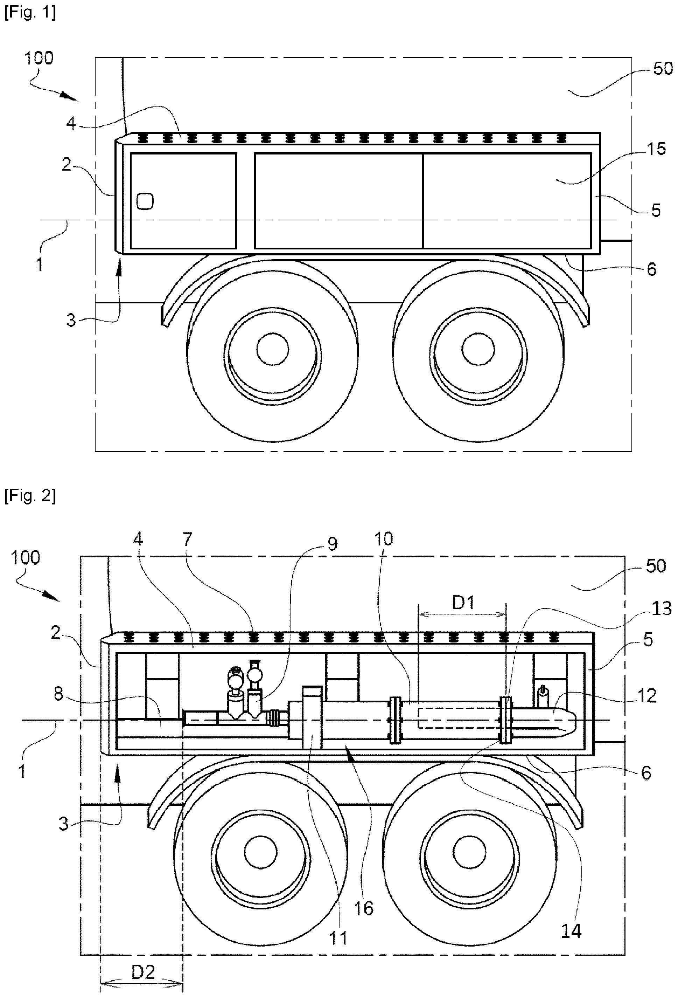

Comme illustré à la figure 1, on a représenté un ensemble cryogénique 100 comportant :
- un réservoir cryogénique 50 ;
- un réceptacle 3 s'étendant selon un axe longitudinal 1 entre un premier côté longitudinal 2 et un deuxième côté longitudinal 5, le réceptacle 3 étant situé à l'extérieur du réservoir cryogénique 50.

Le réceptacle 3 comporte :
- une paroi supérieure 4 munie d'une première pluralité d'orifices 7 pour permettre l'aération du réceptacle 3.
- une paroi inférieure munie d'un bac de collecte 6 pour la collecte de condensats et/ou d'air liquéfié.
- une face avant s'étendant selon un plan parallèle à l'axe longitudinal 1 et comportant au moins une portion amovible 15 ou une paroi amovible 15, pour permettre l'accès à l'intérieur du réceptacle 3.

Selon une réalisation, la face avant comporte une deuxième pluralité d'orifices pour permettre l'aération du réceptacle 3.

Le réceptacle 3 comporte une paroi latérale au niveau du premier côté longitudinal 2 et/ou au niveau du deuxième côté longitudinal, la paroi latérale comportant notamment un bord non rectiligne épousant la paroi externe du réservoir cryogénique 50.

Selon une réalisation, la paroi latérale comporte une troisième pluralité d'orifices pour permettre l'aération du réceptacle 3.

La figure 2 représente l'ensemble cryogénique 100 de la figure 1, la paroi amovible 15 ayant été retirée, ce qui permet l'accès à l'intérieur du réceptacle 3.

Comme représenté à la figure 2, l'ensemble cryogénique 100 comporte une conduite 8.

La conduite 8 comporte :
- une première extrémité connectée au réservoir cryogénique 50 pour qu'un fluide cryogénique contenu dans le réservoir cryogénique 50 puisse circuler dans la conduite 8 ;
- une deuxième extrémité située à l'intérieur du réceptacle 3 ;
- une première portion longitudinale située à l'intérieur du réceptacle 3 et configurée pour permettre au fluide cryogénique de circuler dans un premier sens allant de la première extrémité vers la deuxième extrémité ;
- une deuxième portion longitudinale située à l'intérieur du réceptacle 3 ;
- un coude 12 situé à l'intérieur du réceptacle 3 entre la première portion et la deuxième portion ;
- une bride de raccordement 13 solidaire de la conduite 8 et située entre le coude 12 et la deuxième extrémité, la bride de raccordement 13 étant située à une première distance D1 de la deuxième extrémité.

L'ensemble cryogénique 100 comporte un équipement fluidique 16 comportant une extrémité d'entrée et une extrémité de sortie et étant configuré pour être monté de façon amovible dans le réceptacle 3.

La figure 2 représente l'équipement fluidique 16 lorsqu'il est en position montée.

Lorsque l'équipement fluidique 16 est en position montée :
- la deuxième extrémité est insérée au moins partiellement à l'intérieur de l'équipement fluidique 16 via l'extrémité d'entrée ;
- l'équipement fluidique 16 est raccordé à la bride de raccordement 13 pour permettre au fluide cryogénique d'entrer dans l'équipement fluidique 16 par l'extrémité d'entrée.

L'équipement fluidique 16 comporte un dispositif d'accouplement mécanique 14 avec la bride de raccordement 13. Plus précisément, le dispositif d'accouplement mécanique 14 se situe au niveau de l'extrémité d'entrée et comporte par exemple une bride complémentaire de la bride de raccordement 13.

L'équipement fluidique 16 comporte une pompe 9 et un débitmètre 10.

L'ensemble cryogénique 100 comporte un collier 11 fixé au réceptacle 3. Le collier 11 est configuré pour être disposé dans une première configuration dans laquelle il encercle au moins partiellement l'équipement fluidique 16 et autorise un guidage de l'équipement fluidique 16 pour permettre son coulissement dans la direction de l'axe longitudinal 1.

Le coude 12 est configuré pour permettre au fluide de s'écouler dans la deuxième portion selon un deuxième sens, opposé au premier sens.

La conduite 8 pénètre dans le réceptacle 3 par le premier côté longitudinal 2.

L'ensemble cryogénique 100 comporte un tuyau de distribution du fluide cryogénique (non représenté), tel qu'un flexible, situé au moins partiellement à l'intérieur du réceptacle 3 et étant connecté de manière amovible à l'extrémité de sortie de l'équipement fluidique 16.

La conduite 8 est une conduite isolée thermiquement et sous vide. La conduite 8 est reliée au réservoir cryogénique 50 par une soudure, la conduite 8 et le réservoir cryogénique 50 étant en communication fluidique, notamment via une ouverture.

En position montée de l'équipement fluidique 16, une deuxième distance D2 sépare l'extrémité de sortie de l'équipement fluidique d'un plan orthogonal à l'axe longitudinal 1 et adjacent au premier côté longitudinal 2.

La deuxième distance D2 est strictement supérieure à la première distance D1.

Ceci permet de ménager un espace libre entre l'extrémité de sortie et le premier côté longitudinal 2, cet espace permettant le dégagement de l'équipement fluidique lorsqu'il coulisse le long de l'axe longitudinal 1 jusqu'à ce que la deuxième extrémité sorte de l'équipement fluidique 16.

En position montée de l'équipement fluidique 16, l'extrémité de sortie est plus proche du premier côté longitudinal 2 que du deuxième côté longitudinal 5.

La longueur de la première portion longitudinale est strictement supérieure à la longueur de l'équipement fluidique 16, la longueur de l'équipement fluidique 16 étant mesurée entre ses extrémités d'entrée et de sortie.

Le collier 11 est configuré pour être disposé dans une deuxième configuration dans laquelle l'équipement fluidique 16 est libre par rapport au réceptacle 3 au moins selon une direction transversale à l'axe longitudinal 1.

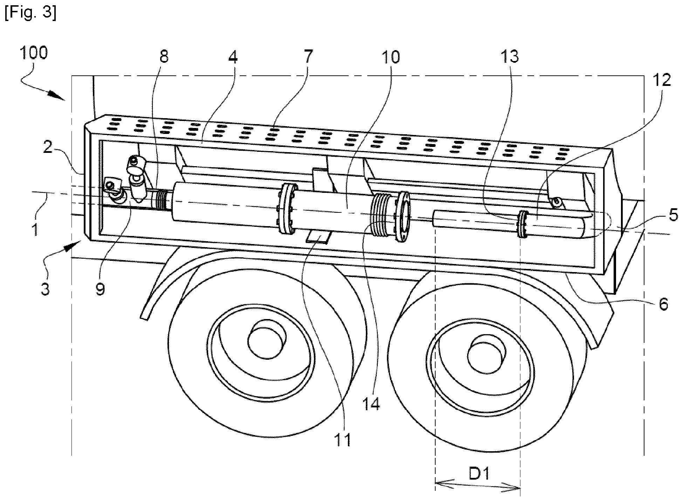

La figure 3 représente en élévation, l'ensemble cryogénique 100 lorsque l'équipement fluidique 16 est en cours de démontage par rapport au réceptacle 3.

Tel que représenté à la figure 3 :
- l'équipement fluidique 16 a coulissé dans le sens de l'axe longitudinal 1, sur une longueur supérieure à la première distance D1, c'est-à-dire jusqu'à une position dans laquelle la deuxième extrémité est en dehors de l'équipement fluidique 16 ;
- le collier 11 est dans la deuxième configuration.

Dans la deuxième configuration du collier 11, une portion démontable du collier 11 a été démontée pour permettre le basculement de l'équipement fluidique 16 par rapport à l'axe longitudinal 1.

Le réceptacle 3 peut être monté sur véhicule tel qu'un camion ou une remorque ou une semi-remorque ou un wagon-citerne pour permettre le déplacement du réservoir cryogénique 50.

En effet, un tel ensemble cryogénique 100 est particulièrement adapté pour une utilisation dans laquelle le réservoir cryogénique 50 est mobile, ce qui implique notamment des contraintes plus sévères que dans le cas où le réservoir cryogénique est stationnaire.

Le véhicule peut comporter un essieu arrière. Le réceptacle 3 peut être monté au niveau de l'essieu arrière, par exemple au-dessus d'un garde-boue.

La conduite 8 entre dans le réceptacle 3 par le premier côté longitudinal 2 et le tuyau de distribution du fluide cryogénique sort du réceptacle 3 par le premier côté longitudinal 2. Le premier côté longitudinal 2 est disposé du côté arrière de la remorque ou de la semi-remorque. Un tel agencement permet de faciliter la distribution du fluide cryogénique à l'arrière de la remorque ou de la semi-remorque tout en réduisant la longueur du tuyau de distribution.

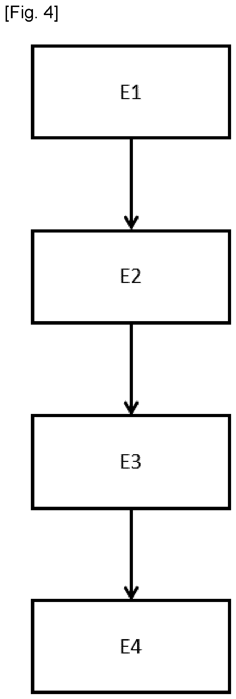

La figure 4 représente les étapes d'un procédé de manutention d'un ensemble cryogénique 100 tel que décrit ci-dessus.

Le procédé de manutention comporte les étapes de :
- désolidariser E2 l'équipement fluidique 16 de la bride de raccordement 13 ;
- déplacer E3 l'équipement fluidique 16 en le faisant coulisser selon l'axe longitudinal 1 en direction du premier côté longitudinal 2, jusqu'à ce que la deuxième extrémité soit située à l'extérieur de l'équipement fluidique 16.
- extraire E4 l'équipement fluidique 16 de l'intérieur du réceptacle 3.

Selon une réalisation, le procédé comporte une étape d'inerter E1 la conduite 8 préalablement à l'étape de désolidariser E2 l'équipement fluidique de la bride de raccordement.

## Revendications

1. Ensemble cryogénique (100) comportant :
- un réservoir cryogénique (50) ;
- un réceptacle (3) s'étendant selon un axe longitudinal (1) entre un premier côté longitudinal (2) et un deuxième côté longitudinal (5), le réceptacle (3) étant situé à l'extérieur du réservoir cryogénique (50) ;
- une conduite (8) comportant :
- une première extrémité connectée au réservoir cryogénique (50) pour qu'un fluide cryogénique contenu dans le réservoir cryogénique (50) puisse circuler dans la conduite (8) ;
- une deuxième extrémité située à l'intérieur du réceptacle (3) ;
caractérisé en ce la conduite comprend:
- une première portion longitudinale située à l'intérieur du réceptacle (3) et configurée pour permettre au fluide cryogénique de circuler dans un premier sens allant de la première extrémité vers la deuxième extrémité ;
- une deuxième portion longitudinale située à l'intérieur du réceptacle (3) ;
- un coude (12) situé à l'intérieur du réceptacle (3) entre la première portion et la deuxième portion ;
- une bride de raccordement (13) solidaire de la conduite (8) et située entre le coude (12) et la deuxième extrémité, la bride de raccordement (13) étant située à une première distance (D1) de la deuxième extrémité ;
et en ce que l'ensemble comprend:
- un équipement fluidique (16) comportant une extrémité d'entrée et une extrémité de sortie et étant configuré pour être monté de façon amovible dans le réceptacle (3), en position montée :
- la deuxième extrémité étant insérée au moins partiellement à l'intérieur de l'équipement fluidique (16) via l'extrémité d'entrée ;
- l'équipement fluidique (16) étant raccordé à la bride de raccordement (13) pour permettre au fluide cryogénique d'entrer dans l'équipement fluidique (16) par l'extrémité d'entrée.

2. Ensemble cryogénique (100) selon la revendication précédente, dans lequel, en position montée de l'équipement fluidique (16), une deuxième distance (D2) sépare l'extrémité de sortie de l'équipement fluidique d'un plan orthogonal à l'axe longitudinal (1) et adjacent au premier côté longitudinal (2), la deuxième distance (D2) étant supérieure à la première distance (D1).

3. Ensemble cryogénique (100) selon l'une des revendications précédentes, dans lequel, la longueur de la première portion longitudinale est supérieure à la longueur de l'équipement fluidique (16) mesurée entre ses extrémités d'entrée et de sortie.

4. Ensemble cryogénique (100) selon l'une des revendications précédentes, dans lequel le coude (12) est configuré pour permettre au fluide de s'écouler dans la deuxième portion selon un deuxième sens, opposé au premier sens.

5. Ensemble cryogénique (100) selon l'une des revendications précédentes, dans lequel la conduite (8) pénètre dans le réceptacle (3) par le premier côté longitudinal (2).

6. Ensemble cryogénique (100) selon l'une des revendications précédentes, comportant un tuyau de distribution du fluide cryogénique, tel qu'un flexible, situé au moins partiellement à l'intérieur du réceptacle (3) et étant connecté de manière amovible à l'extrémité de sortie de l'équipement fluidique (16).

7. Ensemble cryogénique (100) selon l'une quelconque des revendications précédentes, dans lequel le réceptacle (3) comporte une paroi inférieure munie d'un bac de collecte (6) pour la collecte de condensats et/ou d'air liquéfié.

8. Ensemble cryogénique (100) selon l'une quelconque des revendications précédentes, comportant un collier (11) fixé au réceptacle (3) et configuré pour être disposé dans une première configuration dans laquelle il encercle au moins partiellement l'équipement fluidique (16) et autorise un guidage de l'équipement fluidique (16) pour permettre son coulissement dans la direction de l'axe longitudinal (1).

9. Ensemble cryogénique (100) selon la revendication précédente, le collier (11) étant configuré pour être disposé dans une deuxième configuration dans laquelle l'équipement fluidique (16) est libre par rapport au réceptacle (3) au moins selon une direction transversale à l'axe longitudinal (1).

10. Procédé de manutention d'un ensemble cryogénique (100) selon l'une quelconque des revendications précédentes, comportant les étapes de :
- désolidariser (E2) l'équipement fluidique (16) de la bride de raccordement (13) ;
- déplacer (E3) l'équipement fluidique (16) en le faisant coulisser selon l'axe longitudinal (1) en direction du premier côté longitudinal (2), jusqu'à ce que la deuxième extrémité soit située à l'extérieur de l'équipement fluidique (16).
- extraire (E4) l'équipement fluidique (16) de l'intérieur du réceptacle (3).

## Patentansprüche

1. Kryogene Anordnung (100), umfassend:
- einen kryogenen Tank (50);
- einen Behälter (3), der sich entlang einer Längsachse (1) zwischen einer ersten Längsseite (2) und einer zweiten Längsseite (5) erstreckt, wobei der Behälter (3) außerhalb des kryogenen Tanks (50) gelegen ist;
- eine Leitung (8), umfassend:
- ein erstes Ende, das mit dem kryogenen Tank (50) verbunden ist, damit ein in dem kryogenen Tank (50) enthaltenes kryogenes Fluid in der Leitung (8) zirkulieren kann;
- ein zweites Ende, das innerhalb des Behälters (3) gelegen ist;
**dadurch gekennzeichnet, dass** die Leitung umfasst:
- einen ersten Längsabschnitt, der innerhalb des Behälters (3) gelegen ist und dazu ausgestaltet ist, dem kryogenen Fluid zu ermöglichen, in einem ersten Richtungssinn von dem ersten Ende zu dem zweiten Ende zu zirkulieren;
- einen zweiten Längsabschnitt, der innerhalb des Behälters (3) gelegen ist;
- einen Krümmer (12), der innerhalb des Behälters (3) zwischen dem ersten Abschnitt und dem zweiten Abschnitt gelegen ist;
- einen Anschlussflansch (13), der einstückig mit der Leitung (8) ist und zwischen dem Krümmer (12) und dem zweiten Ende gelegen ist, wobei der Anschlussflansch (13) in einem ersten Abstand (D1) von dem zweiten Ende gelegen ist;
und dadurch, dass die Anordnung umfasst:
- eine Fluideinrichtung (16), die ein Einlassende und ein Auslassende umfasst und dazu ausgestaltet ist, lösbar in dem Behälter (3) angebracht zu werden, wobei in der angebrachten Stellung:
- das zweite Ende mindestens teilweise über das Einlassende in den Innenraum der Fluideinrichtung (16) eingeführt ist;
- die Fluideinrichtung (16) an den Anschlussflansch (13) angeschlossen ist, um dem Kryofluid zu ermöglichen, durch das Einlassende in die Fluideinrichtung (16) einzutreten.

2. Kryogene Anordnung (100) nach dem vorhergehenden Anspruch, wobei, in der angebrachten Stellung der Fluideinrichtung (16), ein zweiter Abstand (D2) das Auslassende der Fluideinrichtung von einer Ebene trennt, die senkrecht zu der Längsachse (1) verläuft und an die erste Längsseite (2) angrenzt, wobei der zweite Abstand (D2) größer als der erste Abstand (D1) ist.

3. Kryogene Anordnung (100) nach einem der vorhergehenden Ansprüche, wobei die Länge des ersten Längsabschnitts größer als die Länge der Fluideinrichtung (16), gemessen zwischen ihren Einlass- und Auslassenden, ist.

4. Kryogene Anordnung (100) nach einem der vorhergehenden Ansprüche, wobei der Krümmer (12) dazu ausgestaltet ist, dem Fluid zu ermöglichen, in dem zweiten Abschnitt entlang eines zweiten Richtungssinns zu strömen, der entgegengesetzt zu dem ersten Richtungssinn ist.

5. Kryogene Anordnung (100) nach einem der vorhergehenden Ansprüche, wobei die Leitung (8) in den Behälter (3) durch die erste Längsseite (2) eindringt.

6. Kryogene Anordnung (100) nach einem der vorhergehenden Ansprüche, umfassend ein Ausgaberohr für das kryogene Fluid wie etwa einen Schlauch, das mindestens teilweise innerhalb des Behälters (3) gelegen ist und lösbar mit dem Auslassende der Fluideinrichtung (16) verbunden ist.

7. Kryogene Anordnung (100) nach einem der vorhergehenden Ansprüche, wobei der Behälter (3) eine untere Wand umfasst, die mit einer Auffangwanne (6) zum Auffangen von Kondensat und/oder von verflüssigter Luft versehen ist.

8. Kryogene Anordnung (100) nach einem der vorhergehenden Ansprüche, umfassend eine Schelle (11), die an dem Behälter (3) befestigt ist und dazu ausgestaltet ist, in einer ersten Konfiguration angeordnet zu werden, in der sie die Fluideinrichtung (16) mindestens teilweise umschließt und ein Führen der Fluideinrichtung (16) zulässt, um deren Gleiten in Richtung der Längsachse (1) zu ermöglichen.

9. Kryogene Anordnung (100) nach dem vorhergehenden Anspruch, wobei die Schelle (11) dazu ausgestaltet ist, in einer zweiten Konfiguration angeordnet zu werden, in der die Fluideinrichtung (16) in Bezug auf den Behälter (3) mindestens entlang einer quer zu der Längsachse (1) verlaufenden Richtung frei ist.

10. Verfahren zur Handhabung einer kryogenen Anordnung (100) nach einem der vorhergehenden Ansprüche, umfassend die folgenden Schritte:
- Trennen (E2) der Fluideinrichtung (16) von dem Anschlussflansch (13);
- Verlagern (E3) der Fluideinrichtung (16), indem man sie entlang der Längsachse (1) in Richtung der ersten Längsseite (2) gleiten lässt, bis das zweite Ende außerhalb der Fluideinrichtung (16) gelegen ist;
- Herausziehen (E4) der Fluideinrichtung (16) aus dem Innenraum des Behälters (3).

## Claims

1. Cryogenic unit (100) comprising:
- a cryogenic tank (50);
- a receptacle (3) extending along a longitudinal axis (1) between a first longitudinal side (2) and a second longitudinal side (5), the receptacle (3) being situated outside the cryogenic tank (50);
- a pipe (8) comprising:
- a first end connected to the cryogenic tank (50) so that a cryogenic fluid contained in the cryogenic tank (50) can circulate in the pipe (8);
- a second end situated inside the receptacle (3); **characterized in that** the pipe comprises:
- a first longitudinal portion situated inside the receptacle (3) and configured to allow the cryogenic fluid to circulate in a first direction travelling from the first end towards the second end;
- a second longitudinal portion situated inside the receptacle (3);
- a bend (12) situated inside the receptacle (3) between the first portion and the second portion;
- a connecting flange (13) secured to the pipe (8) and situated between the bend (12) and the second end, the connecting flange (13) being situated at a first distance (D1) from the second end;
and **in that** the unit comprises:
- an item of fluidic equipment (16) comprising an inlet end and an outlet end and configured to be mounted removably inside the receptacle (3) in a mounted position,
- the second end being at least partially inserted into the fluidic equipment (16) via the inlet end;
- the fluidic equipment (16) being connected to the connecting flange (13) so as to allow the cryogenic fluid to enter the fluidic equipment (16) via the inlet end.

2. Cryogenic unit (100) according to the preceding claim, wherein, when the fluidic equipment (16) is in the mounted position, a second distance (D2) separates the outlet end of the fluidic equipment from a plane orthogonal to the longitudinal axis (1) and adjacent to the first longitudinal side (2), the second distance (D2) being greater than the first distance (D1).

3. Cryogenic unit (100) according to one of the preceding claims, wherein the length of the first longitudinal portion is greater than the length of the fluidic equipment (16), measured between the inlet and outlet ends thereof.

4. Cryogenic unit (100) according to one of the preceding claims, wherein the bend (12) is configured to allow the fluid to flow in the second portion in a second direction opposite to the first direction.

5. Cryogenic unit (100) according to one of the preceding claims, wherein the pipe (8) enters the receptacle (3) via the first longitudinal side (2).

6. Cryogenic unit (100) according to one of the preceding claims, comprising a cryogenic-fluid distribution hose, such as a flexible hose, situated at least partially inside the receptacle (3) and connected removably to the outlet end of the fluidic equipment (16).

7. Cryogenic unit (100) according to any one of the preceding claims, wherein the receptacle (3) has a lower wall equipped with a collecting pan (6) for collecting condensate and/or liquefied air.

8. Cryogenic unit (100) according to any one of the preceding claims, comprising a clamping collar (11) fixed to the receptacle (3) and configured to be placed in a first configuration in which it at least partially encircles the fluidic equipment (16) and provides guidance for the fluidic equipment (16) so as to allow it to slide in the direction of the longitudinal axis (1) .

9. Cryogenic unit (100) according to the preceding claim, the clamping collar (11) being configured to be placed in a second configuration in which the fluidic equipment (16) is free with respect to the receptacle (3), at least in a direction transverse to the longitudinal axis (1).

10. Method for handling a cryogenic unit (100) according to any one of the preceding claims, comprising the steps of:
- detaching (E2) the fluidic equipment (16) from the connecting flange (13);
- moving (E3) the fluidic equipment (16) by sliding it along the longitudinal axis (1) towards the first longitudinal side (2) until the second end is situated outside the fluidic equipment (16),
- extracting (E4) the fluidic equipment (16) from inside the receptacle (3).
